(19)

**Europäisches Patentamt**
**European Patent Office**
**Office européen des brevets**

(11) **EP 2 187 472 A2**

(12) **EUROPÄISCHE PATENTANMELDUNG**

(43) Veröffentlichungstag:
**19.05.2010  Patentblatt 2010/20**

(51) Int Cl.:
*H01M 10/052* (2010.01)       *H01M 10/48* (2006.01)
*H01M 10/058* (2010.01)

(21) Anmeldenummer: **09012721.8**

(22) Anmeldetag: **07.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **17.11.2008  DE 102008057710**

(71) Anmelder: **Li-Tec Battery GmbH**
**01917 Kamenz (DE)**

(72) Erfinder:
• **Gutsch, Andreas, Dr.**
**59348 Lüdinghausen (DE)**
• **Schäfer, Tim**
**99762 Niedersachswerfen (DE)**
• **Lachenmeier, Walter, Dr.-Ing.**
**53757 Sankt Augustin (DE)**

(74) Vertreter: **Wallinger, Michael**
**Wallinger Ricker Schlotter Foerstl**
**Patent- und Rechtsanwälte**
**Zweibrückenstraße 5-7**
**D-80331 München (DE)**

(54) **Nach galvanischen Prinzipien arbeitende elektrische Einrichtung, wie ein Lithium-Ionen-Akkumulator, mit einem Temperatursensor**

(57)     Die vorliegende Erfindung betrifft eine nach galvanischen Prinzipien arbeitende Vorrichtung (2), insbesondere ein Lithium-Ionen-Akkumulator bzw. eine Lithium-Ionen-Zelle, mit insbesondere wenigstens zwei Elektrodeneinrichtungen (10; 20), insbesondere einer Kathode und einer Anode, und einer zwischen zwei Elektrodeneinrichtungen angeordneten Separatoreinrichtung (30). Die Vorrichtung (2) umfasst erfindungsgemäß wenigstens eine oder eine Vielzahl von als Temperatursensor ausgebildete bzw. betreibbare Glasfasern (18, 28, 38). Sie kann ein aus Glasfasern ausgebildetes Netz (16, 26, 36) oder eine Anordnung einer Vielzahl von im wesentlichen parallel zu einander angeordneten Glasfasern umfassen, von denen wenigstens eine Glasfaser (18, 28, 38) als Temperatursensor ausgebildet oder betreibbar ist. Eine derartige Glasfaserstruktur kann an einer Oberfläche der Seperatoreinrichtung (30) und/oder der Kathoden- bzw. Anodeneinrichtung (10, 20) angeordnet sein und für diese Einrichtung (30, 10, 20) als Trägermaterial dienen oder in dieser Einrichtung eingebettet sein.

Fig. 1

EP 2 187 472 A2

**Beschreibung**

Die vorliegende Erfindung bezieht sich auf eine nach galvanischen Prinzipien arbeitende Vorrichtung, insbesondere eine Lithium-Ionen-Zelle bzw. einen Lithium-Ionen-Akkumulator mit einem Temperatursensor.

In der jüngsten Zeit entwickelte Batterien bzw. Akkumulatoren, insbesondere Lithium-Ionen-Akkumulatoren, zeichnen sich durch eine hohe Energiespeicherdichte aus. Diese ermöglicht einerseits das Bereitstellen von hohen Ladungs- bzw. Stromkapazitäten, führt jedoch andererseits sowohl beim Aufladen der Batterie bzw. des Akkumulators als auch beim Entladen zu einer Erwärmung im Lade- bzw. Entladebetrieb des Akkumulators. Übermäßige Erwärmungen führen zu einer Verringerung der Kapazität des Akkumulators, einer Verschlechterung der Wiederaufladbarkeit und einer Verringerung der Zahl der möglichen Entlade- und Wiederaufladezyklen, mit anderen Worten einer Verringerung der Lebensdauer des Akkumulators. Insbesondere bei Lithium-Ionen-Akkumulatoren ist dem Fachmann das Problem des "Thermal Run-Away" bekannt, bei dem ab einer gewissen Schwellwerttemperatur sich eine Temperaturzunahme im Akkumulator selbst verstärkt und, wenn diesem Prozess nicht entgegengewirkt wird, zu einer Selbstzerstörung des Akkumulators führen kann.

Mit den Zielen, die Sicherheit beim Betrieb von Lithium-Ionen-Akkumulatoren zu gewährleisten bzw. zu verbessern, die Lebensdauer von Lithium-Ionen-Akkumulatoren zu vergrößern und die Lade- bzw. Entladebetriebsparameter von Lithium-Ionen-Akkumulatoren zu optimieren, wurden in jüngster Zeit Batteriemanagementsysteme zum Überwachen und Steuern eines hinsichtlich der vorgenannten Ziele optimierten Betriebs von Lithium-Ionen-Akkumulatoren entwickelt. Derartige Batteriemanagementsysteme überwachen nicht nur die elektrischen Betriebsparameter eines Lithium-Ionen-Akkumulators, sondern auch dessen Temperatur unter Benutzung gebräuchlicher, am Lithium-Ionen-Akkumulator angeordneter Temperatursensoren. Üblicherweise sind die Temperatursensoren an der Außenseite des Gehäuses eines Lithium-Ionen-Akkumulators angebracht, so dass eine insbesondere übermäßige Erwärmung oder gar eine lokale Überhitzung an den innerhalb des Gehäuses angeordneten, stromführenden Elementen des Akkumulators nicht unmittelbar bzw. nur mit einer Zeitverzögerung detektiert werden können.

Der vorliegenden Erfindung liegt die Aufgabe zugrunde, die Diagnosemöglichkeiten zum Überwachen des Betriebszustands eines Lithium-Ionen-Akkumulators, insbesondere die Erzeugung von Messgrößen für ein Batteriemanagementsystem, zu erweitern und zu verbessern.

Die Aufgabe wird gelöst durch eine nach galvanischen Prinzipien arbeitende Vorrichtung nach dem Anspruch 1. Bei der Vorrichtung handelt es sich insbesondere um eine Lithium-Ionen-Zelle bzw. einen Lithium-Ionen-Akkumulator mit insbesondere wenigstens zwei Elektrodeneinrichtungen, wie einer Kathode und einer Anode, und einer zwischen den wenigstens zwei Elektrodeneinrichtungen angeordneten Separatoreinrichtung.

Erfindungsgemäß umfasst die Vorrichtung wenigstens eine als Temperatursensor ausgebildete bzw. betreibbare Glasfaser oder eine Vielzahl davon. Eine derartige Glasfaser verschafft den Vorteil, dass die Temperatur aufgrund der kleinen Wärmekapazität der Glasfaser nahezu ohne zeitliche Verzögerung bzw. Messträgheit messbar ist. Dies ist vorteilhaft für ein zeitaufgelöstes Überwachen der Betriebstemperatur des Akkumulators und zum Ableiten einer Stellgröße für ein Batteriemanagementsystem, insbesondere einen Laderegler. Aufgrund der geringen Abmessung einer Glasfaser kann diese auch sehr genau an einer solchen Position positioniert werden, wo die insbesondere kurzzeitige Temperaturänderungen besonders ausgeprägt sind.

Unter einem Akkumulator wird hierin eine aus einer oder mehreren internen Zellen bzw. elektrischen Speicherzellen bestehende Vorrichtung verstanden, wobei in einer jeweiligen Zelle chemische Energie in Elektrizität bzw. elektrische Energie umgewandelt wird, und die Vorrichtung als eine Quelle elektrischer Leistung genutzt wird.

Unter einer Zelle wird hierin eine elektrochemische Einheit eines Akkumulators verstanden. Eine Zelle umfasst in der Regel zwei Elektroden, insbesondere eine Kathode und eine Anode, sowie eine zwischen den Elektroden angeordnete Separatoreinrichtung. Die Elektroden und der Separator sind in einem gasdicht abgeschlossenen Gehäuse bzw. Behälter angeordnet. Der Behälter enthält ferner ein Elektrolyt bzw. eine elektrolytische Flüssigkeit, in der die Elektroden und der Separator eingetaucht sind.

Unter einer Separatoreinrichtung wird hierin eine flächenartig ausgebildete Einrichtung zur Separierung bzw. Trennung der Elektroden einer elektrochemischen Zelle, insbesondere einer Lithium-Ionen-Zelle, verstanden. Die Separatoreinrichtung umfasst eine poröse funktionelle Schicht, die insbesondere die Aufgaben erfüllt, eine Teilmenge des Elektrolyten aufzunehmen, Lithium-Ionen hindurchzuleiten bzw. hindurch diffundieren zu lassen, und als Elektrodensperre zu dienen.

Unter einer Glasfaser wird hierin eine zur Leitung von Licht insbesondere Laserlicht ausgebildete, dünne zylinderförmige Faser aus Glas zur Leitung von Licht verstanden, mit anderen Worten eine sogenannte Lichtleitfaser oder optische Faser.

Unter einer als Temperatursensor betreibbaren Glasfaser wird hierin eine Glasfaser bzw. eine Lichtleitfaser verstanden, die so ausgebildet ist, dass durch eine optische Messung eine von der Temperatur abhängige, die Lichtausbreitung in der Glasfaser beeinflussende Eigenschaft gemessen wird. Insbesondere kann die optische Eigenschaft die Charakterisierung von durch inelastische Streuprozesse an Molekülen der Glasfaser, wie etwa Raman-Streuung oder Brillouin-Streuung, erzeugtem Licht umfassen.

Ein erster, als Temperatursensor ausgebildeter bzw. betreibbarer Teilbereich der wenigstens einen Glasfaser kann innerhalb einer Gehäuseeinrichtung der Vorrichtung und ein zweiter Teilbereich der Glasfaser außerhalb der Gehäuseeinrichtung angeordnet sein. Die Anordnung des ersten als Temperatursensor ausgebildeten bzw. betreibbaren Teilbereichs im Inneren der Gehäuseeinrichtung ermöglicht die Messung der Temperatur in-situ, d.h. direkt an einer Messposition im Inneren der Gehäuseeinrichtung, wo die Wärmeentwicklung unmittelbar stattfindet und daher frühzeitig detektiert werden kann. Durch die Anordnung des zweiten Teilbereichs der Glasfaser außerhalb der Gehäuseeinrichtung wird die Information über die im Inneren des Gehäuses gemessene Temperatur auf optischem Wege, d.h. über Messungen einer Lichtmodulation bzw. Intensität im wesentlichen störungsfrei gegenüber elektrischen oder elektromagnetischen Einflüssen zum Auswerten der Temperatur nach außen geführt.

Eine entsprechende Temperaturmess- bzw. Überwachungsvorrichtung kann außerhalb der Gehäuseeinrichtung angeordnet sein und der zweite Teilbereich der Glasfaser in optischer Kommunikation mit der Temperaturmessvorrichtung angeordnet sein. Die Messvorrichtung kann mit einer optischen Multiplexeinrichtung versehen sein, welche es gestattet, aus einer Vielzahl von angeschlossenen, als Temperatursensor ausgebildeten bzw. betreibbaren Glasfasern eine bestimmte Glasfaser auszuwählen und die erforderlichen optischen Messungen bzw. die Messung der Lichtmodulation zur Gewinnung der Information über die Temperatur des in-situ angeordneten, temperatursensitiven Teilbereichs der Glasfaser zu erhalten.

Weitere Vorteile der Temperaturmessung mittels einer als Temperatursensor ausgebildeten Glasfaser sind folgende. Die Information über die Temperatur in einem temperatursensitiven Bereich der Glasfaser innerhalb der Gehäuseeinrichtung wird optisch und jedenfalls potentialfrei, d.h. ohne elektrische Wirkverbindung von dem temperatursensitiven Bereich im Innern der Gehäuseeinrichtung nach außerhalb der Gehäuseeinrichtung, insbesondere zu einer außerhalb der Gehäuseeinrichtung angeordneten Messvorrichtung übertragen. Dadurch ist die Temperaturmessung auch bei hohen elektrischen Potenzialen, die im Betrieb in einer nach galvanischem Prinzip arbeitenden Vorrichtung vorliegen können, möglich. Auch tritt bei der Messung und Auswertung optischer Eigenschaften von aus der Glasfaser austretendem Licht keine die Temperaturmessung beeinflussende Störung durch im temperatursensitiven Bereich möglicherweise herrschende elektromagnetische Felder auf. Schließlich können die auf der Messung inhärenter optischer Eigenschaften des aus der Glasfaser austretendem Lichts basierenden Arten der Temperaturmessung auch eingesetzt werden, wenn sich der temperatursensitive Bereich bzw. die nach galvanischen Prinzip arbeitende Vorrichtung, aus der die Glasfaser heraus geführt wird, in einem explosionsgefährdenden Bereich befindet.

Die wenigstens eine Glasfaser kann wenigstens in einem Teilbereich der Glasfaser sowohl Licht, das zum Ausüben einer Temperaturmessung aufbereitet bzw. moduliert ist, oder Licht, das durch den Einfluss der Temperatur hinsichtlich seiner Aufbereitung oder Modulation verändert ist, als auch Licht, das zum Übertragen von Daten aufbereitet bzw. moduliert ist, leiten. Auf diese Weise kann die Glasfaser nicht nur zur Temperaturmessung, sondern auch zum Übertragen von Daten, beispielsweise zu anderen innerhalb der Gehäuseeinrichtung angeordneten Mess- oder Regeleinrichtungen dienen.

Die Vorrichtung kann eine, zwei, drei oder eine beliebige Vielzahl von als Temperatursensoren ausgebildete bzw. betreibbare Glasfasern umfassen. Beispielsweise kann die Vorrichtung einen insbesondere als Glasfaser ausgebildeten Temperatursensor an einer oder beiden Elektrodeneinrichtungen, an einer Elektrodeneinrichtung und der Separatoreinrichtungen, oder an beiden Elektrodeneinrichtungen und der Separatoreinrichtung umfassen. So kann die Temperatur an mehreren Positionen bzw. mehreren Elementen der Vorrichtung gleichzeitig gemessen bzw. überwacht werden.

Die Vorrichtung kann ein aus Glasfasern ausgebildetes Netz oder eine Anordnung einer Vielzahl von im wesentlichen parallel zueinander angeordneten Glasfasern umfassen. In dem Netz bzw. der Anordnung kann wenigstens eine Glasfaser oder eine Vielzahl von Glasfasern als Temperatursensor ausgebildet oder betreibbar sein. Auf diese Weise wird eine ortsausgelöste Temperaturmessung bzw. eine Messung der Temperaturverteilung über den von dem Netz bzw. der Anordnung eingenommenen Bereich ermöglicht, und nicht nur eine Temperaturmessung an einer Position, wie das mit herkömmlichen Temperatursensoren der Fall war.

In der Vorrichtung kann eine oder eine Vielzahl von Glasfasern an einer Oberfläche der Separatoreinrichtung angeordnet sein oder zumindest in einem, insbesondere flächenförmigen, Teilbereich der Separatoreinrichtung eingebettet sein. Insbesondere kann die Separatoreinrichtung ein aus Glasfasern ausgebildetes Netz umfassen, wobei wenigstens eine oder mehrere der Glasfasern des Netzes als Temperatursensor ausgebildet oder betreibbar sind. Auch auf diese Weise wird eine Mehrfachnutzung der Glasfasern möglich, nämlich einerseits als Temperatursensor zum Messen der Temperatur in-situ im Innern der Vorrichtung und andererseits als poröses Trägermaterial für die Separatoreinrichtung. Das Netz kann ein Gewebe aus Glasfasern sein. Eine jeweilige Glasfaser kann eine Dicke in der Größenordnung von 10 $\mu$m aufweisen. Mit einem derartigen Gewebe- bzw. Mikrogewebe, wie es beispielsweise am Institut für Textiltechnik in Aachen in jüngster Zeit entwickelt worden ist, wird eine homogenere Porenverteilung in der Separatoreinrichtung ermöglicht als das mit einem üblichen Separatormaterial, beispielsweise Separion®, möglich ist. In ein derartiges Gewebe können eine oder mehrere als Temperatursensor ausgebildete Glasfasern, insbesondere in regelmäßigen Abständen, eingelegt bzw. eingewebt werden. Ein derartiges Gewebe kann auf der Separatoreinrichtung aufgelegt oder darin eingebettet sein. Mit einem derartigen Gewebe wird eine ortsaufgelöste Temperaturmessung bzw. eine Messung der Temperaturverteilung im Bereich der Separatoreinrichtung möglich.

In der Vorrichtung kann auch eine oder eine Vielzahl von als Temperatursensor ausgebildeter bzw. betreibbarer Glasfasern an einer Oberfläche von wenigstens einer der Elektrodeneinrichtungen angeordnet sein oder in wenigstens einer der Elektrodeneinrichtungen eingebettet sein. Auf diese Weise wird eine Temperaturmessung in-situ an den Positionen ermöglicht, wo die Wärme durch die elektrochemischen Prozesse bzw. die Stromentwicklung entsteht.

In der vorgenannten Ausführungsform kann eine Struktur von parallel zueinander angeordneten Glasfasern oder ein aus Glasfasern ausgebildetes Netz auf der wenigstens einen Elektrodeneinrichtung aufgelegt oder in dieser eingebettet sein, wobei wenigstens eine der Glasfasern als Temperatursensor ausgebildet oder betreibbar ist. Auf diese Weise ist wiederum eine funktionelle Doppelnutzung der Glasfasern möglich, nämlich einerseits als Trägermatrix für die Elektrodeneinrichtung und andererseits zur Temperaturmessung, und insbesondere im Fall der Ausbildung mehrerer Glasfasern als Temperatursensor zur ortsaufgelösten Temperaturmessung im Bereich der Struktur bzw. des Netzes. Die wenigstens eine Elektrodeneinrichtung kann eine Schicht einer aktiven Elektrodenmasse und eine mit dieser Schicht in elektrisch leitfähiger Verbindung stehende Stromableitereinrichtung umfassen. Die wenigstens eine Glasfaser oder die Struktur bzw. das Netz von Glasfasern, von denen wenigstens eine als Temperatursensor ausgebildet oder betreibbar ist, kann in der Schicht der aktiven Elektrodenmasse eingebettet oder darauf aufgelegt sein oder zumindest in einem Teilbereich der Stromableitereinrichtung aufgelegt oder eingebettet, oder an der Grenzfläche zwischen der aktiven Elektrodenmasse und der Stromableitereinrichtung angeordnet sein. Wenn die wenigstens eine Glasfaser oder die aus Glasfasern ausgebildete Struktur bzw. das Netz in der Stromableiteinrichtung eingebettet oder darauf aufgelegt ist, kann auf eine gesonderte Durchführung der Glasfaser bzw. der Glasfasern durch eine Wand der Gehäuseeinrichtung bzw. das Einbringen einer entsprechenden Durchführungsvorrichtung in die Gehäusewand verzichtet werden, weil die Stromableiteinrichtung ohnehin durch die Gehäuseeinrichtung eines Akkumulators nach außerhalb der Gehäuseeinrichtung geführt wird.

Insbesondere umfasst die Vorrichtung in der Regel wenigstens eine Gehäuseeinrichtung. Dabei kann die wenigstens eine Glasfaser bzw. im Falle einer Struktur bzw. eines Netzes aus mehreren Glasfasern, für eine jeweilige Glasfaser ein erster, als Temperatursensor ausgebildeter bzw. betreibbarer Teilbereich der Glasfaser an bzw. in einer der Elektrodeneinrichtungen bzw. in der Separatoreinrichtung befestigt sein und ein zweiter Teilbereich der Glasfaser kann an bzw. in der Gehäuseeinrichtung befestigt sein. Auf diese Weise dient die wenigstens eine Glasfaser bzw. die Struktur oder das Netz von Glasfasern neben der Temperaturmessung zum Fixieren der Elektrodeneinrichtung bzw. der Separatoreinrichtung innerhalb der Gehäuseeinrichtung.

Für eine jeweilige als Temperatursensor ausgebildete bzw. betreibbare Glasfaser kann in wenigstens einem Teilbereich der Glasfaser ein mit einem lichtleitenden Kernbereich der Glasfaser in optischer Kommunikation stehender, lumineszierender Kristall angeordnet sein.

Insbesondere kann der Kristall mit optischen Messungen auslesbare, temperaturabhängige Lumineszenzeigenschaften aufweisen.

In einer ersten Ausführungsform des Kristalls kann die Wellenlänge von in dem Kristall erzeugten Lumineszenzlicht von der Temperatur des Kristalls abhängen. Insbesondere kann der Kristall Al:GaAs enthalten. Die Änderung der Wellenlänge in Abhängigkeit von der Temperatur kann dabei für kontinuierlich eingestrahltes Licht oder für gepulst eingestrahltes Licht gemessen werden.

In einer zweiten Ausführungsform des Kristalls kann die Abklingzeit einer Lumineszenzlichtintensität, die in dem Kristall durch bezüglich seiner Intensität modulierten Lichts, insbesondere einen Lichtimpuls, angeregt worden ist, von der Temperatur des Kristalls abhängen. Insbesondere kann der Kristall ZnS oder Cr:YAg enthalten. Zur Verbesserung der Messgenauigkeit kann dabei die Abklingzeit aus einer Mittelwertbildung über wiederholte unabhängige Messungen ermittelt werden.

In einer anderen Ausführungsform und unter Benutzung eines anderen, auf einem optischen Verfahren basierenden Temperaturmessprinzips kann in wenigstens einem als Temperatursensor ausgebildeten oder betreibbaren Teilbereich der wenigstens einen Glasfaser ein mit einem lichtleitenden Kernbereich der Glasfaser in optischer Kommunikation stehendes, sogenanntes Faser-Bragg-Gitter ausgebildet sein. Unter einem Faser-Bragg-Gitter wird hierin eine insbesondere in einer Längsrichtung der Glasfaser ausgebildete, periodische Brechungsindexvariation verstanden. In dieser Ausführungsform wirkt die periodische Brechungsindexvariation in Reflexion als wellenlängenselektiver Spiegel und in Transmission als wellenlängenselektives, den reflektierten Teil einer eingestrahlten Wellenlängenverteilung nicht durchlassendes optisches Filter. Die Wellenlänge des reflektierten Lichts bzw. des in Transmission abgeblockten Lichts ist proportional zum geometrischen Abstand der periodischen Brechungsindexvariationen, d.h. der Periodenlänge, die über die temperaturabhängige Ausdehnung bzw. Kontraktion der Glasfaser von der Temperatur abhängt.

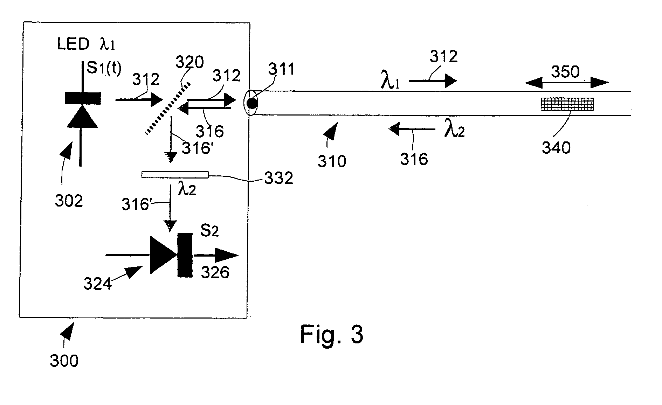

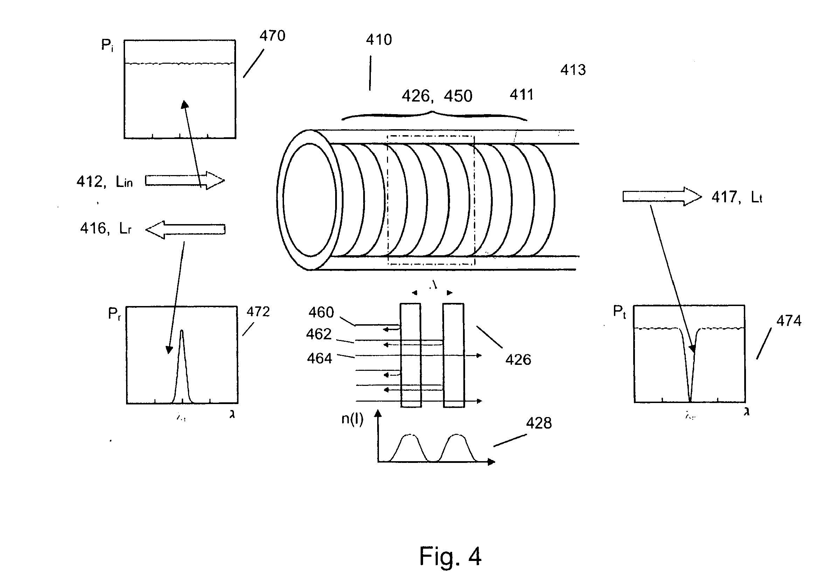

Das optische Temperaturmessprinzip unter Benutzung eines lumineszierenden Kristalls wird weiter unten mit Verweis auf Fig. 3 und das Messprinzip unter Benutzung eines Faser-Bragg-Gitters mit Verweis auf Fig. 4 näher erläutert.

In einer weiteren Ausführungsform kann wenigstens eine Glasfaser zumindest in einem Teilbereich zur Temperaturmessung als Raman-Fasersensoreinrichtung oder als Brillouin-Fasersensoreinrichtung betrieben werden. Raman- bzw. Brillouin-Streuung sind in Kristallgittern, wie dem einer Glasfaser, bei Lichteinstrahlung ohnehin stattfindende, inelastische Streuprozesse. Die Messung bzw. optische Charakterisierung von durch diese inelastischen Streuprozesse erzeugtem Licht erfordert keine besondere strukturelle Ausbildung im temperatursensitiven Bereich der Glasfaser, wie etwa das Einbringen eines lumineszierenden Kristalls oder das Ausbilden eines Faser-Bragg-Gitters; es genügt die Bereitstellung der Glasfaser als solche. Der Betrieb als Raman-Fasersensoreinrichtung oder als Brillouin-Fasersensoreinrichtung kann einen auf den temperatursensitiven Bereich der Glasfaser gerichteten, ortsaufgelösten Betrieb basierend auf einer Laufzeitmessung von Lichtpulsen umfassen.

Weitere vorteilhafte Ausführungsformen und Vorteile der Erfindung ergeben sich aus der folgenden Beschreibung mit Verweis auf die beigefügten Figuren. Darin zeigt:

Fig. 1 einen schematischen Querschnitt durch eine nach galvanischen Prinzipien arbeitende Vorrichtung nach der Erfindung.

Fig. 2 ein schematisches Blockschaltbild einer Messvorrichtung zum Ausführen einer Messung einer von der Temperatur abhängigen, optischen Eigenschaft einer als Temperatursensor ausgebildeten bzw. betreibbaren Glasfaser.

Fig. 3 eine schematische Anordnung zum Messen temperaturabhängiger Lumineszenzeigenschaften einer durch Einbringen eines lumineszierenden Kristalls als Temperatursensor ausgebildeten Glasfaser.

Fig. 4 eine schematische Darstellung des Messprinzips zum Betreiben als Temperatursensor einer durch Ausbilden eines Faser-Bragg-Gitters als Temperatursensor ausgebildeten Glasfaser.

Fig. 5 eine schematische Darstellung einer durch inelastische Streuprozesse (Raman-Streuung und Brilioun-Streuung) in einer Kristallstruktur, wie einer Glasfaser, durch Einstrahlen von monochromatischem Licht erzeugte Frequenzverteilung des gestreuten Lichts.

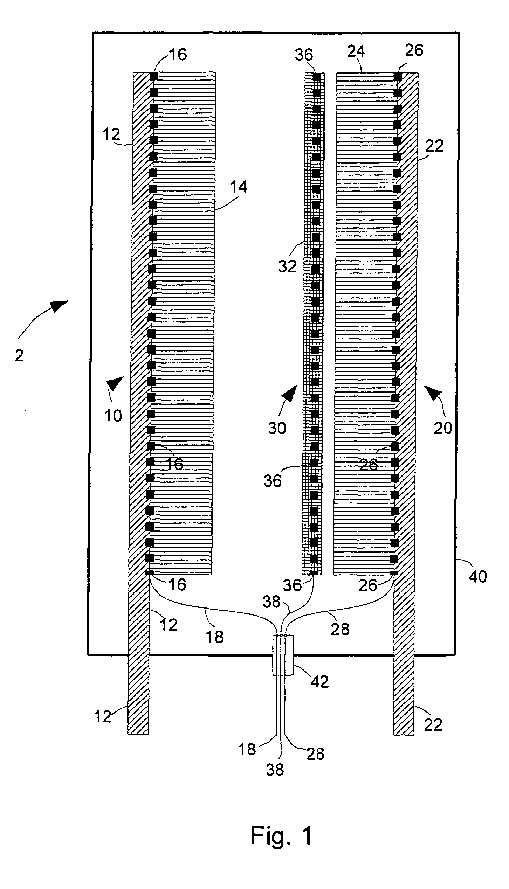

Fig. 1 zeigt als erfindungsgemäße Ausführungsform einer nach galvanischem Prinzip arbeitenden Vorrichtung in schematischer Querschnittansicht eine Lithium-Ionen-Zelle 2. Die Lithium-Ionen-Zelle 2 umfasst eine Kathode 10 mit einem Stromableiter 12, einer Kathodenaktivschicht bzw. -aktivmasse 14 und einer Glasfaserstruktur 16; eine Anode 20 mit einem Anodenstromableiter 22, einer Anodenaktivschicht bzw. -aktivmasse 24 und einer Glasfaserstruktur 26; eine Separatoreinrichtung 30 mit einem geeignet gewählten Separatormaterial 32 und einer Glasfaserstruktur 36; eine Gehäuseeinrichtung 40 mit einer Durchführung 42 zum Durchführen von Glasfasern von der Innenseite des Gehäuses zur Außenseite des Gehäuses; eine oder mehrere zur Kathode 10 führende Sensorfasern 18, eine oder mehrere zur Anode 20 führende Sensorfasern 28 und eine oder mehrere zur Separatoreinrichtung 30 führende Sensorfasern 38. Die Gehäuseeinrichtung 40 ist gefüllt mit einer elektrolytischen Flüssigkeit (nicht gezeigt), die die Elektrode 10, die Anode 20 und den Separator 30 umgibt und die eine elektrochemische Wirkverbindung zwischen diesen Elementen herstellt.

Die erfindungsgemäß bereitgestellte Glasfaserstruktur 16 der Kathode ist an der Grenzfläche bzw. Kontaktfläche zwischen der Aktivmasse 14 der Kathode und dem Stromableiter 12 der Kathode bereitgestellt. Die Glasfaserstruktur 16 ist als gewebtes Netz von Glasfasern ausgebildet und das Netz enthält mehrere parallel zueinander angeordnete, sich in einer Richtung über die Ausdehnung des Netzes erstreckende, als Temperatursensor ausgebildete Glasfasern. Die als Temperatursensor ausgebildeten Glasfasern bzw. Sensorfasern 18 erstrecken sich auch außerhalb der Glasfaserstruktur 16 und sind über die in der Gehäusewand 40 angeordnete Glasfaserdurchführung 42 nach außen bzw. außerhalb des Gehäuses 40 geführt. In ähnlicher Ausführung ist die Glasfaserstruktur 26 der Anode an der Grenzfläche zwischen der Aktivmasse 24 der Anode und dem Anodenstromableiter 22 angeordnet und enthält eine Vielzahl von als Temperatursensor ausgebildeten Glasfasern 28. Die als Temperatursensor ausgebildeten Glasfasern der Anodenglasfaserstruktur 26 erstrecken sich auch außerhalb der Glasfaserstruktur 26 und sind ebenfalls durch die Glasfaserdurchführung 42 nach außen geführt.

Die in Fig. 1 gezeigte Glasfaserdurchführung 42 ist gasdicht in der Wand des Gehäuses 40 eingebettet bzw. abgedichtet, so dass das Gehäuse 40 insgesamt gasdicht ausgebildet ist.

Die Separatoreinrichtung 30 umfasst eine funktionelle Schicht, eines porösen Separatormaterials 32, in dem eine Glasfaserstruktur 36 eingebettet ist. Die Glasfaserstruktur 36 enthält ebenfalls eine Vielzahl von parallel zueinander angeordneten und sich in einer Richtung durch das Separatormaterial erstreckenden, als Temperatursensor ausgebildete Glasfasern 38. Die Sensorfasern 38 erstrecken sich auch außerhalb der Glasfaserstruktur 36 und sind ebenfalls durch die Glasfaserdurchführung 42 nach außerhalb des Gehäuses 40 geführt.

Die Kathodenglasfaserstruktur 16, die Anodenglasfaserstruktur 26 und die Separatorglasfaserstruktur 36 sind jeweils als ein Gewebe aus Glasfasern mit einer Dicke in der Größenordnung von etwa 10 μm ausgeführt.

Die Glasfaserstruktur 36 dient als Trägermatrix bei der Herstellung für das Aufbringen des Separatormaterials 32.

Die Glasfaserstruktur 16 bzw. 26 der Kathode 10 bzw. Anode 20 kann alternativ zu der oben beschriebenen und in Fig. 1 gezeigten Ausführungsform auch vollständig in der Aktivmasse 14 bzw. 24 der Kathode bzw. Anode eingebettet sein.

Alternativ dazu kann die Glasfaserstruktur 16 bzw. 26 der Kathode bzw. Anode auch vollständig in dem Stromableiter 12 bzw. 22 der Kathode bzw. Anode eingebettet sein, wobei die als Temperatursensor ausgebildeten Glasfasern eingebettet in dem jeweiligen Stromableiter aus dem Gehäuse 40 herausgeführt werden. Diese Ausführungsform hat den Vorteil, dass wenn in der Separatoreinrichtung keine als Temperatursensor ausgebildeten Glasfasern vorgesehen sind, auf eine gesonderte Glasfaserdurchführung, wie das in Fig. 1 gezeigte Element 42, zum Herausführen der Glasfasern aus dem Gehäuse 40 verzichtet werden kann.

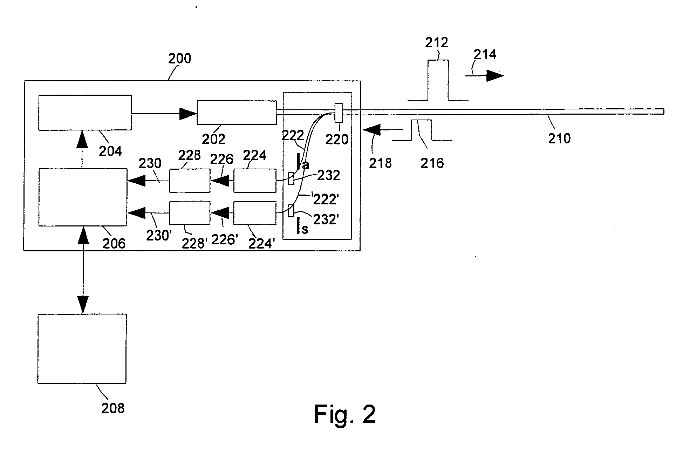

Fig. 2 zeigt ein schematisches Blockschaltbild einer Messvorrichtung 200 zum Betreiben einer als Temperatursensor ausgebildeten bzw. betreibbaren Glasfaser 210. Die Messvorrichtung 200 umfasst als Lichtquelle einen Laser 202, der Licht insbesondere in der Form eines Lichtpulses 212 erzeugt und in die Sensorfaser 210 überträgt; eine Steuerungseinheit 204 zum Ansteuern bzw. Betreiben der Lichtquelle (Laser) 202; eine Lichtauskopplungseinrichtung 220 zum Auskoppeln von (in der Fig. 2 durch den Pfeil 218 dargestellten Richtung) zurücklaufendem Licht, insbesondere in der Form eines zu empfangenden Lichtpulses (Messlichtpulses) 216 aus der Sensorfaser 210 in Messlichtleiter 222, 222'; die Messlichtleiter 220, 220' zum Übertragen des ausgekoppelt empfangenen Lichts, in Abhängigkeit von dem optischen Temperaturmessprinzip gegebenenfalls erforderliche Filter 232, 232'; Fotodetektor/en 224, 224', die die empfangenen Lichtsignale in elektrische Signale umwandeln und als Detektorausgangssignal 226, 226' ausgeben; Signalverstärker 228, 228', die die Detektorausgangssignale 226, 226' in Verstärkerausgangssignale 230, 230' verstärken bzw. umformen; eine Abtast- und Wertermittlungseinheit 206, die die Verstärkerausgangssignale 230, 230' als Eingabe empfängt; und einen Computer 208, der zum Ansteuern und Auslesen der Abtast- und Wertermittlungseinheit 206 in bi-direktionalem Signal- bzw. Datenaustausch mit der Einheit 206 verbunden ist. Die Messvorrichtung 200, insbesondere die Lichtquelle 202 und die Lichtauskopplungseinrichtung 220, sind an dem aus dem Inneren eines Gehäuses einer Lithium-Ionen-Zelle herausgeführten Ende der Glasfaser (Sensorfaser) 210 angeschlossen.

Ein Messlichtleiter 222, ein gegebenenfalls erforderliches optisches Filter 232, ein Fotodetektor 224, ein Signalverstärker 228 sowie ein Eingang mit der zugehörigen Eingangs- bzw. Auswerteelektronik in der Abtast- und Wertermittlungseinheit 206 bilden jeweils einen Lichtmesskanal. Je nach angewendetem Messprinzip zum Messen der Temperatur in dem temperatursensitiven Teilbereich der Sensorfaser 210 sind ein oder zwei Lichtmesskanäle erforderlich und bereitgestellt.

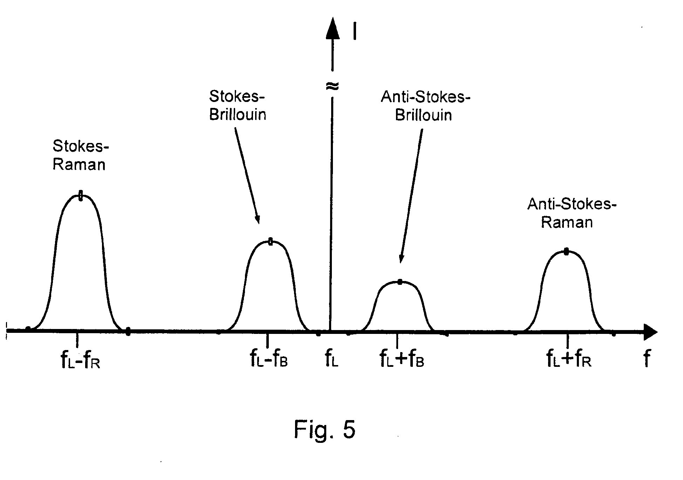

Im Folgenden wird beispielhaft eine Ausführungsform der Messvorrichtung zum Betreiben der Lichtleitfaser 210 als Raman-Fasersensoreinrichtung oder als Brillouin-Fasersensoreinrichtung mit Verweis auf Fig. 2 und Fig. 5 beschrieben. Beim Betrieb der Sensorfaser 210 als Raman- bzw. Brillouin-Fasersensoreinrichtung erzeugt ein Hochleistungslaser 202 monochromatische Lichtpulse 212 mit hoher Intensität I und einer Frequenz $f_L$. Die Lichtpulse 212 werden in die Lichtleitfaser 210 eingekoppelt, werden darin (in Richtung des in Fig. 2 gezeigten Pfeils 214) zu dem temperatursensitiven Teilbereich (nicht gezeigt) geführt und erzeugen über insbesondere inelastische Streuprozesse, einschließlich der sogenannten Raman-Streuung und der Brillouin-Streuung, Lichtpulse mit von der Frequenz $f_L$ des eingekoppelten Lichts verschiedenen Frequenzen bzw. Frequenzbändern, wie in Fig. 5 schematisch dargestellt.

Beim inelastischen Raman-Streuprozess wechselwirkt das eingekoppelte Licht 212 mit der Frequenz $f_L$ mit Molekülen bzw. Molekülverbindungen in dem temperatursensitiven Teilbereich der Sensorglasfaser 210. Dabei führen die Moleküle bzw. Molekülverbindungen thermische Schwingungen mit einer Eigenfrequenz $f_R$ (der sogenannten Raman-Frequenz) aus. Durch die Wechselwirkung des eingekoppelten Lichts mit der Frequenz $f_L$ mit der Schwingungseigenfrequenz $f_R$ des Moleküls bzw. der Molekülverbindung entstehen Mischfrequenzen $f_L+f_R$ und $f_L-f_R$ bzw. entsprechende Frequenzbänder, die als Anti-Stokes-Raman bzw. Stokes-Raman Lichtintensitätsverteilungen bezeichnet werden (siehe Fig. 5). In einer quantenphysikalischen Betrachtungsweise wechselwirken jeweilige Lichtquanten der Frequenz $f_L$ mit dem schwingungsfähigen Molekül bzw. Molekülverbindung mit der Eigenfrequenz $f_R$. Ein Lichtquant der Frequenz $f_L$ kann gemäß dem sogenannten Stokes-Raman-Streuprozess das schwingungsfähige Molekül bzw. die Molekülverbindung in einen höheren, d.h. um die Eigenfrequenz $f_R$ höherfrequenten Schwingungszustand anregen und dabei seine Lichtfrequenz auf die sogenannte Stokes-Raman-Frequenz $f_L-f_R$ verringern. Ein Lichtquant mit der Stokes-Raman-Frequenz $f_L-f_R$ bzw. ein Lichtpuls 216 läuft in der in Fig. 2 durch den Pfeil 218 gezeigten Richtung in der Sensorfaser 210 zurück in Richtung auf die Messvorrichtung 200, wird durch die Lichtauskopplungseinrichtung 220 in den Messlichtleiter 222 ausgekoppelt und durch ein Filter 232 zu einem Fotodetektor 224 geführt. Der Fotodetektor 224 wandelt den empfangenen Lichtpuls um in ein elektrisches Detektorausgangssignal 216. Dieses wird in einem Signalverstärker 228 verstärkt und in eine für einen digitalen Zähler zählbare Form (elektrischer Strom bzw. Spannungsimpuls) umgeformt, und in einem in der Abtast- und Wertermittlungseinheit 206 bereitgestellten Zähler gezählt. In dem Messlichtkanal ist vor dem Fotodetektor 224 ein optisches Filter 232 bereitgestellt, das zum Durchlassen des durch inelastische Streuprozesse erzeugtem Licht in den entsprechenden Frequenzbändern und zum Abblocken von Licht mit anderen Frequenzen, insbesondere zum Abblocken der intensitätsstarken Lichts mit der Laseranregungsfrequenz $f_L$, dient.

Zusätzlich zu dem Stokes-Raman-Licht der Frequenz $f_L$-$f_R$, das wie zuvor beschrieben durch Anregen des Moleküls bzw. der Molekülverbindung in einen höheren Schwingungszustand überführt wird, wird in einem anderen Prozess, dem sogenannten Anti-Stokes-Raman Prozess, Licht mit der Frequenz $f_L$+$f_R$ erzeugt. In der quantenphysikalischen Betrachtungsweise befindet sich bei diesem Prozess das Molekül bzw. die Molekülverbindung zu Beginn in einem höheren Schwingungszustand, gibt bei der Wechselwirkung mit dem Lichtquant der Frequenz $f_L$ an das Lichtquant einen Teil seiner Schwingungsenergie ab, und wird dabei in ein niedrigeres Schwingungsniveau mit einer um die Eigenfrequenz $f_R$ niedrigeren Frequenz überführt. Das Lichtquant nimmt die abgegebene Energie auf, wodurch sich seine Frequenz vom Wert $f_L$ auf den Wert $f_L$+$f_R$ erhöht. Das sogenanntes Anti-Stokes-Raman-Licht mit der Frequenz $f_L$+$f_R$ wird in einem zweiten Messkanal 220', 232', 224', 228' detektiert.

Beim Betrieb des Fasersensors 210 als Raman-Fasersensoreinrichtung werden die Intensitäten des Lichts mit der Stokes-Raman-Frequenz $f_L$-$f_R$ (bzw. der zugehörigen Frequenzverteilung) und des Lichts mit Anti-Stokes-Raman-Frequenz $f_L$+$f_R$ (bzw. der zugehörigen Frequenzverteilung) gemessen und das Verhältnis dieser beiden Lichtintensitäten ausgewertet. Aus diesem Intensitätsverhältnis wird die Temperatur in dem Bereich der Lichtleitfaser 210, wo die inelastischen Streuprozesse stattgefunden haben, ausgewertet. Das Verhältnis der Intensitäten des Stokes-Raman-Lichts und des Anti-Stokes-Raman-Lichts hängt von der Temperatur ab, weil die Anzahl der zu Beginn des inelastischen Streuprozesses sich in dem höheren Schwingungszustand befindlichen Moleküle bzw. Molekülverbindungen im Verhältnis zur Anzahl der sich im niedrigeren Schwingungszustand befindlichen Moleküle bzw. Molekülverbindungen, d.h. die Besetzungswahrscheinlichkeit des höheren Schwingungszustands, von der Temperatur abhängt.

Die Eigenschwingungsfrequenz $f_R$ des Moleküls bzw. der Molekülverbindung hängt von der Temperatur im wesentlichen nicht ab, sondern ist ein von der Art des Moleküls bzw. der Molekülverbindung charakteristischer, vorbestimmter Parameter. Entsprechend können die Filtercharakteristiken bzw. die Frequenzgänge der optischen Filter 232 bzw. 232' (beispielsweise sogenannten Monochromatoreinrichtungen) vorab auf den Nachweis von Stokes-Licht oder Anti-Stokes-Licht geeignet gewählt bzw. eingestellt werden.

In der Praxis ist die Wahrscheinlichkeit für inelastische Raman-Streuprozesse in der Größenordnung von 1:10$^6$ oder geringer als im Vergleich zu der Wahrscheinlichkeit von elastischen Streuprozessen. Das aus der Lichtleitfaser 210 zurücklaufende Licht umfasst also einen sehr hohen Intensitätsanteil elastisch gestreuten Lichts mit der Frequenz $f_L$ sowie die im Verhältnis der Streuwahrscheinlichkeit bezüglich ihrer Intensität sehr viel schwächeren Stokes- bzw. Anti-Stokes-Lichtfrequenzbänder (siehe Fig. 5). Jedoch kann durch Messung über einen längeren Zeitraum bzw. eine Mittelwertbildung die unterschiedliche Intensität des Stokes- und Anti-Stokes-Lichtverteilungspaares in der Abtast- und Wertermittlungseinheit 206 gemessen werden und das Intensitätsverhältnis zur Temperaturermittlung ausgewertet werden.

Dem Betrieb der Glasfaser (Fasersensor) 210 als Brillouin-Fasersensoreinrichtung liegt ein anderer inelastischer Lichtstreuprozess zugrunde, die sogenannte Brillouin-Streuung. Bei der Brillouin-Streuung wechselwirkt das von der Lichtquelle (dem Laser 202) erzeugte und übertragene Anregungslicht der Frequenz $f_L$ mit den Gitterschwingungen des Materials der Glasfaser, d.h. des Glases in dem temperatursensitiven Bereich. Unter Gitterschwingungen werden hierin die Schwingungen, die ein Molekül bzw. eine Molekülgruppe des Materials (des Glases) in Beziehung zu den umgebenden Molekülen bzw. Molekülgruppen ausführt, verstanden. Die Gitterschwingungen haben charakteristische Eigenfrequenzen $f_B$, die kleiner sind als die innerhalb eines Moleküls bzw. einer Molekülgruppe auftretenden, die Raman-Streuung bewirkenden intramolekularen Schwingungen (mit Frequenzen $f_R$).

Für die Gitterschwingungen gilt, dass deren Eigenfrequenz (die Brillouin-Frequenz $f_B$) von der Temperatur abhängt. Beim Betrieb einer Sensorfaser als Brillouin-Fasersensors wird daher die Veränderung der Frequenz des Anregungslichts vom Wert $f_L$ auf den Wert $f_L$+$f_B$ bzw. den Wert $f_L$-$f_B$, d.h. die der Gitterschwingungseigenfrequenz entsprechende Frequenzänderung $f_B$, ausgewertet und zur Temperaturbestimmung herangezogen.

Ähnlich wie bei der Raman-Streuung entstehen bei der Brillouin-Streuung durch die Wechselwirkung des Anregungslichts mit der Frequenz $f_L$ und Gitterschwingungen mit der Eigenfrequenz $f_B$ Mischfrequenzen $f_L$+$f_B$ bzw. $f_L$-$f_B$. Im quantenphysikalischen Bild entsteht ein Lichtquant mit der Frequenz $f_L$-$f_B$ (Stokes-Brillouin-Licht), wenn das Anregungslicht (Frequenz $f_L$) eine Gitterschwingung anregt bzw. in ein höheres Schwingungsniveau überführt und dabei Energie abgibt bzw. seine Frequenz um den Betrag der Frequenz der angeregten Gitterschwingung verringert. Ein Lichtquant mit der Frequenz $f_L$+$f_B$ (sogenanntes Anti-Stokes-Brillouin-Licht) entsteht, wenn eine aktive Gitterschwingung bei der Wechselwirkung mit dem Anregungslicht (Frequenz $f_L$) in einen niedrigeren Schwingungszustand überführt wird und dabei Energie an ein Anregungslichtquant abgibt, welches dadurch seine Frequenz um die Gitterschwingung erhöht.

Weitere Einzelheiten der Auswertung bzw. Temperaturbestimmung beim Betrieb als Raman- bzw. Brillouin-Fasersensor sind für die Erfindung nicht wesentlich und werden daher nicht weiter ausgeführt.

Fig. 3 zeigt schematisch eine als Temperatursensor ausgebildete Sensorfaser 310 und eine zum Betreiben derselben mit dieser in optischer, operativer Verbindung stehende Messvorrichtung 300. Die Sensorfaser 310 umfasst einen sich durch deren gesamte Längserstreckung der Sensorfaser 310 erstreckenden, lichtleitenden Kernbereich 311 und eine diesen Kernbereich 311 umgebende, optisch isolierende Umhüllung (nicht gekennzeichnet). In einem Bereich ihrer Längserstreckung umfasst die Sensorfaser 310 einen temperatursensitiven Bereich 350, in dem als eigentlich temperatursensitives Element ein lumineszierender Kristall 340 in optischer Kommunikation mit dem Kernbereich 311 angeordnet ist. Der temperatursensitive Bereich 350 mit dem lumineszierenden Kristall 340 ist im Betrieb innerhalb einer nach galvanischem Prinzip arbeitenden Vorrichtung an einer zur Temperaturmessung besonders geeigneten Position, beispielsweise innerhalb der in Fig. 1 gezeigten Glasfaserstrukturen 16, 26, 36 der Kathoden-, Anoden- bzw. Separatoreinrichtung, angeordnet. Ein anderer Teilbereich der Sensorfaser 310 ist außerhalb der nach galvanischen Prinzipien arbeitenden Vorrichtung angeordnet und an die Messvorrichtung 300 angeschlossen.

Die Messvorrichtung 300 ist eine zum Betreiben der Sensorfaser 310 mit dem lumineszierenden Kristall 340 abgeänderte Ausführungsform einer Messvorrichtung wie der in Fig. 2 gezeigten. Die Messvorrichtung 300 umfasst eine lichtemittierende Diode (LED) 302 als Laserlichtquelle, einen halbdurchlässigen Spiegel 320 als Lichtein- bzw. Auskopplungseinrichtung, ein optisches Filter 332 zum Abblocken von Licht mit der Wellenlänge der Laserlichtquelle und zum Übertragen von in dem Kristall 340 erzeugten Lumineszenzlicht 316, und eine Fotodiode 324 als Fotodetektor, die einen Teil des zu detektierenden Lumineszenzlichts 316' empfängt und in ein elektrisches Detektorausgangssignal 326 bzw. $S_2$ umwandelt. Das Detektorausgangssignal 326 wird, falls erforderlich, von einem elektrischen Signalverstärker (nicht gezeigt) verstärkt und einer Abtast- und Wertermittlungseinheit (nicht gezeigt) zugeführt. Letztere wertet das Signal aus und ermittelt die dem Signal entsprechende Temperatur.

Im Betrieb erzeugt die lichtemittierende Diode 302 ein bezüglich seiner Intensität geeignet moduliertes Lichtsignal $S_1(t)$ mit einer Wellenlängenverteilung, die die zum Anregen von Lumineszenzlicht in dem Kristall 340 geeignete Wellenlänge $\lambda_1$ umfasst. Das von der LED 302 ausgesendete Lumineszenzanregungslicht 312 wird, beispielsweise durch eine Objektiv- bzw. Fokussiereinrichtung (nicht gezeigt) in den lichtleitenden Kernbereich 311 der Sensorfaser 310 eingekoppelt, läuft von der Sensorfaser 310 geführt zu dem Kristall 340 (wie in Fig. 3 durch Pfeile 312 angedeutet), und erzeugt in dem Kristall 340 Lumineszenzlicht mit einer für den Kristall

340 spezifischen Wellenlänge $\lambda_2$ bzw. einer die Wellenlänge $\lambda_2$ insbesondere als ein Maximum umfassenden Wellenlängenverteilung. Ein Teil des im Kristall 340 angeregten bzw. erzeugten Lumineszenzlichts wird von der Sensorfaser 312 zur Messvorrichtung 300 zurückgeführt (wie in Fig. 3 durch Pfeile 316 angedeutet), von dem halbdurchlässigen Spiegel 320 in Richtung zum Fotodetektor 324 reflektiert, durchläuft das optische Filter 332 und erreicht den Fotodetektor 324, der das Lumineszenzlicht 316' in das elektrische Detektorausgangssignal 326 umwandelt.

Mit einer mit Verweis auf Fig. 3 vorgehend allgemein beschriebenen Messanordnung 300 sind je nach Art bzw. Wahl des Kristalls 340 zwei verschiedene Arten der Temperaturmessung möglich. Zum einen kann ausgenutzt werden, dass die Wellenlänge $\lambda_2$ des Lumineszenzlichts 316 von der Temperatur des Kristalls 340 abhängt. Beispielsweise zeigt mit Aluminium dotiertes Galliumarsenid (Al:GaAs) eine besonders deutlich ausgeprägte Abhängigkeit der Wellenlänge des Lumineszenzlichts von der Temperatur. Zum Messen der Temperaturabhängigkeit der Wellenlänge ist das optische Filter 332 als abstimmbares, wellenlängenselektives Filterelement, beispielsweise als ein sogenannter optischer Monochromator, ausgebildet.

Nach der anderen Art der Temperaturmessung kann die Abhängigkeit der Abklingzeit eines Lumineszenzlichtimpulses von der Temperatur ausgenutzt werden. Eine temperaturabhängige Abklingzeit von Lumineszenzlichtimpulsen ist beispielsweise für die Kristalle Zinksulfid (ZnS) oder mit Chrom dotiertes Yttriumaluminiumgranat (Cr:YAG) bekannt. Zur Messung der Temperaturabhängigkeit der Abklingzeit eines Lichtimpulses wird der Kristall 340 mit einem Lichtsignal $S_1(t)$ mit einer zeitlich modulierten Intensität angeregt. Das Lichtsignal $S_1(t)$ kann insbesondere eine als Funktion der Zeit rechteckförmige Intensitätsänderung (Rechteckfunktion) oder eine stufenförmige Intensitätsänderung (Stufenfunktion) aufweisen. In Antwort auf die Anregung durch eine mit einer derartigen Sprungfunktion modulierten Lichtintensität zeigt der Kristall (z.B. ZnS, Cr:Yag) ein Lumineszenzlicht, dessen Intensität sich in der Zeit beispielsweise gemäß einer Exponentialfunktion ändert. Eine Abtast- und Wertermittlungseinheit (nicht gezeigt) nimmt die Zeitabhängigkeit des durch das Lumineszenzlicht 316 in dem Fotodetektor 324 erzeugten Signals 326 bzw. $S_2(t)$ auf und ermittelt daraus, beispielsweise durch Bilden einer zeitlichen Ableitung (Differenzieren nach der Zeit), die Temperatur des Kristalls 340. Wenn die durch eine Sprungfunktion angeregte Lumineszenzlichtintensität sich gemäß einer Expanentialfunktion ändert, ermittelt die Abtast- und Wertermittlungseinheit als Maß für die Temperatur des Kristalls 340 einen zu der zeitlichen Ableitung reziproken Wert, die sogenannte Abklingzeit der Lumineszenzlichtintensität. 326 bzw. S2 auswertenden.

Anhand von Fig. 4 wird im folgenden ein weiteres, zur Temperaturmessung in einem temperatursensitiven Bereich 450 einer Sensorfaser 410 geeignetes, optisches Messverfahren erläutert. Die in Fig. 4 in schematischer Vergrößerung dargestellte Sensorfaser 410 umfasst einen lichtleitenden Kernbereich 411 und eine den Kernbereich 411 umgebende, optisch abschirmende Umhüllung 413 sowie einen als temperatursensitiven Bereich 450 ausgebildeten Teilbereich des Kernbereichs 411, in dem eine periodische Brechungsindexmodulation 426 ausgebildet ist. Die in der Glasfaser 410 ausgebildete periodische Brechungsindexmodulation 426 wird hierin auch als Faser-Bragg-Gitter bezeichnet.

Das Faser-Bragg-Gitter bzw. die Brechungsindexmodulation 426 umfasst einen im Kernbereich 411 entlang der Ausbreitungsrichtung des eingestrahlten Lichts 412 bzw. $L_{in}$ beispielsweise sinusförmig ausgebildeten Brechungsindexverlauf 428 (siehe das im unteren Bereich der Fig. 4 gezeigte Schaubild). Zur Veranschaulichung wird in Fig. 4 innerhalb des temperatursensitiven Bereichs 450 der Glasfaser 410 eine Vielzahl von (im Beispiel 5) Perioden der Brechungsindexmodulaton 426 gezeigt. Zur weiteren Vereinfachung sind in dem im unteren Bereich der Fig. 4 gezeigten Schaubild 428 nur zwei räumlich benachbarte Perioden der Modulation 426 des Brechungsindex n als Funktion einer Längsposition (Koordinate I) in der Sensorfaser 410, insbesondere mit ihren um einen Abstand (Periodenlänge) $\Lambda$ beabstandeten Maxima bzw. Minima, gezeigt.

Für eingestrahltes Licht 412 mit einem kontinuierlichen Spektrum von Wellenlängen (wie durch die im Schaubild 470 links oben in Fig. 4 gezeigte Intensitätsverteilung $P_i$ des eingekoppelten Lichts $L_{in}$ veranschaulicht) wirkt die Brechungsindexmodulation 426 in Reflexion als ein wellenlängen-selektiver Spiegel (wie durch die im Schaubild 472 links unten in Fig. 4 gezeigte Intensitätsverteilung $P_r$ des reflektierten Lichts $L_r$ veranschaulicht) und in Transmission als ein wellenlängen-selektives Bandfilter (wie durch die im Schaubild 474 rechts unten in Fig. 4 gezeigte Intensitätsverteilung $P_t$ des transmittierten Lichts $L_t$ veranschaulicht).

In dem durch die Brechungsindexmodulation 426 transmittierten Licht 417 bzw. $L_t$ (vergleiche die Intensitätsverteilung 474 in Fig. 4) fehlen in Bezug auf das eingestrahlte Licht 412 bzw. $L_{in}$ (vergleiche die Intensitätsverteilung 470 in Fig. 4) die Anteile des an der Brechungsindexmodulaton 426 reflektierten Lichts 416 bzw. $I_r$ (vergleiche die Intensitätsverteilung 472 in Fig. 4). Dementsprechend zeigt die Intensitätsverteilung 474 des transmittierten Lichts einen schmalbandigen Einbruch mit einem Minimum bei der gleichen Wellenlänge $\lambda_B$, wo die Intensitätsverteilung 472 des reflektierten Lichts sein Maximum aufweist.

Das Schaubild 472 (d.h. die Intensitätsverteilung des an der Brechungsindexmodulation 426 reflektierten Lichts 416 als Funktion der Lichtwellenlänge $\lambda$) zeigt eine schmalbandige Intensitätsverteilung mit einem deutlich ausgeprägten Maximum bei einer bestimmten Wellenlänge $\lambda_B$. Diese Wellenlänge $\lambda_B$ ist proportional zu dem Abstand (der Periodenlänge) $\Lambda$ zweier benachbarter Perioden der Brechungsindexmodulation 426. Es kann gezeigt werden, dass folgende Beziehung gilt:

$$\lambda_B = 2 \times n_{eff} \times \Lambda$$

In dieser Gleichung ist $n_{eff}$ der effektive Brechungsindex, d.h. der mittlere Brechungsindex des im Schaubild 428 gezeigten Brechungsindexverlaufs n(I), $\Lambda$ die Periodenlänge der Brechungsindexmodulation 426 und $\lambda_B$ die Wellenlänge am Maximum der schmalbandigen Intensitätsverteilung des reflektierten Lichts (siehe Schaubild 472) bzw. die Wellenlänge am Minimum der schmalbandigen Intensitätsverteilung des transmittierten Lichts (siehe Schaubild 474), die sogenannte Bragg-Wellenlänge.

Die durch oben gezeigte die Gleichung beschriebene Beziehung zwischen der Bragg-Wellenlänge $\lambda_B$ des reflektierten bzw. transmittierten Lichts und der Periodenlänge $\Lambda$ der Brechungsindexmodulation 426 lässt sich anschaulich verstehen als Ergebnis von sogenannter konstruktiver, d.h. sich gegenseitig verstärkender Überlagerung (Interferenz) von Teilwellen von Licht, das an verschiedenen, benachbarten Perioden der Brechungsindexmodulation 426 reflektiert bzw. transmittiert wird. Die anhand des Schaubilds 426 in Fig. 4 erläuterte Bedingung für eine konstruktive Überlagerung (Interferenz) bei der Reflexion von Teilwellen ist, dass der optische Laufweg 460 einer an einer Periode der Brechungsindexmodulation 426 reflektierten ersten Teilwelle sich von dem optischen Laufweg 426 einer an einer benachbarten Periode der Brechungsindexmodulation 426 reflektierten zweiten Teilwelle um die Wellenlänge $\lambda$ des eingestrahlten Lichts (oder um ein ganzförmiges Vielfaches davon) unterscheidet. Der optische Laufwegunterschied entspricht der doppelten Periodenlänge $\Lambda$ der Brechungsindexmodulation 426.

Aufgrund der temperaturabhängigen Längenänderung der Glasfaser 410 in dem temperatursensitiven Bereich 450 ändert sich auch der Abstand $\Lambda$ zweier benachbarter Perioden der Brechungsindexmodulation 426 und gemäß der oben erläuterten Beziehung auch die Wellenlänge $\lambda_B$ des Maximums des Intensitätsspektrums 472 des reflektierten Lichts $L_r$, 416. Dementsprechend wird bei dem Temperaturmessverfahren mit einem Faser-Bragg-Gitter die Wellenlänge $\lambda_B$ des Maximums (bzw. Minimums) des Intensitätsspektrums 472 (bzw. 474) des reflektierten (bzw. transmittierten) Lichts bestimmt und daraus die Temperatur in dem temperatursensitiven Bereich 450 (mit dem Faser-Bragg-Gitter) ermittelt.

Ein Faser-Bragg-Gitter bzw. eine periodische Brechungsindexmodulation 426 kann beispielsweise mittels eines fotolitografischen Verfahrens wie folgt hergestellt werden. Zunächst wird eine Glasfaser 410 mit einem fotosensitiven Kernbereich 411 bereitgestellt. Um darin nun eine räumlich periodische Brechungsindexmodulation 426 (d.h. ein Faser-Bragg-Gitter) in der Glasfaser 410 zu erzeugen, wird unter Verwendung einer Maske mit einer periodisch modulierten Transparenz für das kurzwellige Licht, beispielsweise UV-Licht, eine räumlich modulierte Verteilung des kurzwelligen Lichts erzeugt und in den fotosensitiven, als temperatursensitiv auszubildenden Bereich 450 der Glasfaser 410 eingestrahlt.

Unter dem Begriff fotosensitiv bzw. fotosensitives Material wird hierin verstanden, dass der Brechungsindex des fotosensitiven Materials (wie in dem als Faser-Bragg-Gitter auszubildenden Kernbereich 411) für Wellenlängen im optisch messbaren Wellenlängenbereich durch Einstrahlen von im Vergleich dazu relativ kurzwelligem Licht, beispielsweise UV-Licht, als Funktion der Dosis des eingestrahlten, relativ kurzwelligen Lichts veränderbar ist. Dabei beeinflusst der so veränderte Brechungsindex die Ausbreitung von Licht im optisch Wellenlängenbereich, wie es im Betrieb der Sensorfaser als Temperatursensor als Messlicht 412 benutzt wird, und wird von diesem Licht nicht weiter verändert.

Sämtliche in den Anmeldungsunterlagen offenbarten Merkmale werden als für die Erfindung wesentlich beansprucht, sofern sie einzeln oder in Kombination gegenüber dem Stand der Technik neu sind.

**Bezugszeichenliste**

| | |
|---|---|
| 2 | nach galvanischem Prinzip arbeitende Vorrichtung |
| 10 | Kathode |
| 12 | Stromableiter (Kathode) |
| 14 | Aktivmasse (Kathode) |
| 16 | Glasfaserstruktur (Kathode) |
| 18 | Sensorfaser zur Kathode |
| 20 | Anode |
| 22 | Stromableiter (Anode) |
| 24 | Aktivmasse (Anode) |
| 26 | Glasfaserstruktur der Anode |
| 28 | Sensorfaser zur Anode |
| 30 | Separatoreinrichtung |
| 32 | Separatormaterial |
| 36 | Glasfaserstruktur |
| 38 | Sensorfaser zum Separator |
| 40 | Gehäuseeinrichtung |
| 42 | Glasfaserdurchführung |
| 200 | Messvorrichtung |
| 202 | Laserlichtquelle |
| 204 | Steuerungseinheit |
| 206 | Abtast- & Wertermittlungseinheit |
| 208 | Computer |
| 210 | Glasfaser (Sensorfaser) |
| 212 | übertragener Lichtpuls |
| 214 | Laufrichtung des übertragenen Lichtpulses |
| 216 | zu empfangender Lichtpuls (Messlichtpuls) |
| 218 | Laufrichtung des zu empfangenden Lichtpulses |
| 220 | Lichtauskopplungseinrichtung |
| 222, 222' | Messlichtleiter |
| 224, 224' | Photodetektor |
| 226, 226' | Detektorausgangssignal |
| 228, 228' | Signalverstärker |
| 230, 230' | Verstärkerausgangssignal |
| 232, 232' | optischer Filter |
| 300 | Messvorrichtung |
| 302 | Laserlichtquelle (z.B. LED) |
| 310 | Glasfaser |
| 311 | Kernbereich |
| 312 | eingestrahltes Licht (Anregungslicht) |
| 316, 316' | Lumineszenzlicht |
| 320 | halbdurchlässiger Spiegel |
| 332 | Filter |
| 324 | Photodetektor (z.B. Photodiode) |
| 326 | Detektorausgangssignal $S_2$ |
| 340 | lumineszierender Kristall |
| 350 | temperatursensitiver Bereich |
| 410 | Glasfaser |
| 411 | Kernbereich |
| 412 | eingestrahltes Licht |
| 413 | Umhüllung |
| 416, $L_r$ | reflektiertes Licht |
| 417, $L_t$ | transmittiertes Licht |
| 426 | Brechungsindexmodulation (schematisiert) |
| 428 | Brechungsindexverlauf (ortsaufgelöst, idealisiert) |
| 450 | temperatursensitiver Bereich |
| 460 | Laufweg einer ersten reflektierten Wellenfront |
| 462 | Laufweg einer zweiten reflektierten Wellenfront |
| 464 | Laufweg einer transmittierten Wellenfront |
| 470 | Intensitätsspektrum des eingestrahlten Lichts $L_{in}$ |
| 472 | Intensitätsspektrum des reflektierten Lichts $L_r$ |
| 474 | Intensitätsspektrum des transmittierten Lichts $L_t$ |

**Patentansprüche**

1. Nach galvanischen Prinzipien arbeitende Vorrichtung (2), insbesondere ein Lithium-Ionen-Akkumulator bzw. eine Lithium-Ionen-Zelle, mit insbesondere wenigstens zwei Elektrodeneinrichtungen (10; 20), insbesondere einer Kathode und einer Anode, und einer zwischen zwei Elektrodeneinrichtungen angeordneten Separatoreinrichtung (30), **dadurch gekennzeichnet, dass** die Vorrichtung (2) wenigstens eine oder eine Vielzahl von als Temperatursensor ausgebildete bzw. betreibbare Glasfasern (18, 28, 38) umfasst.

2. Vorrichtung nach Anspruch 1, **dadurch gekennzeichnet, dass** ein erster, als Temperatursensor ausgebildeter bzw. betreibbarer Teilbereich der wenigstens einen Glasfaser (18, 28, 38) innerhalb einer Gehäuseeinrichtung (40) und ein zweiter Teilbereich der Glasfaser außerhalb der Gehäuseeinrichtung angeordnet ist.

3. Vorrichtung nach Anspruch 1 oder 2, **dadurch gekennzeichnet, dass** die wenigstens eine Glasfaser (18, 28, 38) wenigstens in einem Teilbereich der Glasfaser Licht, das zum Ausüben einer Temperaturmessung aufbereitet ist, und Licht, das zum Übertragen von Daten aufbereitet ist, leitet.

4. Vorrichtung nach einem der vorhergehenden Ansprüche, **dadurch gekennzeichnet, dass** die Vorrichtung (2), ein aus Glasfasern ausgebildetes Netz (16, 26, 36) oder eine Anordnung einer Vielzahl von im wesentlichen parallel zu einander angeordneten Glasfasern umfasst, wobei wenigstens eine Glasfaser (18, 28, 38) als Temperatursensor ausgebildet oder betreibbar ist.

5. Vorrichtung nach Anspruch 1 oder 3, **dadurch gekennzeichnet, dass** eine oder eine Vielzahl von als Temperatursensor ausgebildete bzw. betreibbare Glasfasern an einer Oberfläche der Separatoreinrichtung (30) angeordnet sind oder zumindest in einem flächenförmigen Teilbereich der Separatoreinrichtung (30) eingebettet sind.

6. Vorrichtung nach Anspruch 5, **dadurch gekennzeichnet, dass** die Separatoreinrichtung (30) ein aus Glasfasern ausgebildetes Netz (36) umfasst, wobei wenigstens eine der Glasfasern (38) als Temperatursensor ausgebildet oder betreibbar ist.

7. Vorrichtung nach einem der vorhergehenden Ansprüche, **dadurch gekennzeichnet, dass** eine oder eine Vielzahl von als Temperatursensor ausgebildete bzw. betreibbare Glasfasern an einer Oberfläche von wenigstens einer der Elektrodeneinrichtungen (10, 20) angeordnet oder in wenigstens einer der Elektrodeneinrichtungen (10, 20) eingebettet ist.

8. Vorrichtung nach Anspruch 7, **dadurch gekennzeichnet, dass** eine Struktur von parallel zueinander angeordneten Glasfasern oder ein aus Glasfasern ausgebildetes Netz (16, 26) in der wenigstens einen Elektrodeneinrichtung (10, 20) eingebettet oder auf dieser aufgelegt ist, wobei wenigstens eine der Glasfasern (18; 28) als Temperatursensor ausgebildet oder betreibbar ist.

9. Vorrichtung nach einem der vorhergehenden Ansprüche, **dadurch gekennzeichnet, dass** die Vorrichtung ferner wenigstens eine Gehäuseeinrichtung (40) umfasst, und die wenigstens eine Glasfaser in einem ersten, als Temperatursensor ausgebildeten bzw. betreibbaren Teilbereich an bzw. in einer der Elektrodeneinrichtungen (10, 20) oder an bzw. in der Separatoreinrichtung (30) und in einem zweiten Teilbereich an bzw. in der Gehäuseeinrichtung (40) befestigt ist.

10. Vorrichtung nach einem der Ansprüche 1 bis 9, **dadurch gekennzeichnet, dass** in wenigstens einem Teilbereich einer als Temperatursensor ausgebildeten bzw. betreibbaren Glasfaser (310) ein mit einem lichtleitenden Kernbereich (311) der Glasfaser (310) in optischer Kommunikation stehender, lumineszierender Kristall (340) angeordnet ist.

11. Vorrichtung nach Anspruch 10, **dadurch gekennzeichnet, dass** die Wellenlänge ($\lambda_2$) von in dem Kristall (340) erzeugten Lumineszenzlicht von der Temperatur des Kristalls abhängt und dass der Kristall (340) insbesondere Al:GaAs enthält.

12. Vorrichtung nach Anspruch 12, **dadurch gekennzeichnet, dass** die Abklingzeit einer Lumineszenzlichtintensität (316), die in dem Kristall (340) durch bezüglich seiner Intensität modulierten Lichts (312) angeregt worden ist, von der Temperatur des Kristalls abhängt und dass der Kristall (340) insbesondere ZnS oder Cr:YAG enthält.

13. Vorrichtung nach einem der Ansprüche 1 bis 9, **dadurch gekennzeichnet, dass** in wenigstens einem als Temperatursensor ausgebildeten oder betreibbaren Teilbereich der wenigstens einen Glasfaser (410) ein mit einem lichtleitenden Kernbereich (411) der Glasfaser in optischer Kommunikation stehendes Faser-Bragg-Gitter ausgebildet ist, und dass das Faser-Bragg-Gitter insbesondere eine in einer Längsrichtung der Glasfaser ausgebildete, temperaturabhängige, periodische Brechungsindexvariation (426) umfasst.

14. Vorrichtung nach einem der Ansprüche 1 bis 9, **dadurch gekennzeichnet, dass** wenigstens eine Glasfaser (210) zumindest in einem Teilbereich zur Temperaturmessung als Raman-Fasersensoreinrichtung oder als Brillouin-Fasersensoreinrichtung betrieben wird.

15. Vorrichtung nach Anspruch 14, **dadurch gekennzeichnet, dass** der Betrieb als Raman-Fasersensoreinrichtung oder als Brillouin-Fasersensoreinrichtung einen auf den Teilbereich gerichteten, ortsaufgelösten Betrieb basierend auf einer Laufzeitmessung von Lichtpulsen (212, 216) umfasst.

Fig. 1

Fig. 2

Fig. 3

P$_i$

470

410

413

426, 450    411

412, L$_{in}$

416, L$_r$

417, L$_t$

P$_r$    472

P$_t$

474

460
462
464

426

n(l)

428

λ

Fig. 4

Stokes-
Raman

Stokes-
Brillouin

Anti-Stokes-
Brillouin

Anti-Stokes-
Raman

$I$

$f_L - f_R$     $f_L - f_B$     $f_L$     $f_L + f_B$     $f_L + f_R$     $f$

Fig. 5